# EUROPEAN PATENT APPLICATION

(11) **EP 1 964 733 A1**
(43) Date of publication of application: **03.09.2008**
(21) Application number: 08001691.8
(22) Date of filing: 30.01.2008
(51) Int. Cl.: B60S 1/38

(54) **Wiper blade of a windscreen wiper for motor vehicles**

(30) Priority: 27.02.2007 IT TO20070137
(71) Applicant: Creaco, Giovanni, 10091 Alpignano (TO) (IT); Valde, Giuseppe, 10147 Torino (IT)
(72) Inventor: Creaco, Giovanni, 10091 Alpignano (TO) (IT); Valde, Giuseppe, 10147 Torino (IT)
(74) Representative: Lotti, Giorgio

(57) **Abstract**

Described herein is a wiper blade for the windscreen wiper of a motor vehicle of the type in which the wiper blade is connected directly to the oscillating arm and is made up of an arched metal lamina (4) and a wiper (5) made of elastomeric material provided with an internal longitudinal cavity (9), in which the metal lamina (4) has a substantially rectangular cross section with rounded edges and is pinched between two projections, a top one (10) and a bottom one (11), shaped like rounded cusps and provided within the cavity (9).

## Description

The present invention relates to a wiper blade for a windscreen wiper for motor vehicles, obtained with an innovative shape for the purpose of prolonging the service life and improving operation thereof.

The windscreen wipers currently available on the market are usually made up of three distinct parts. The first is constituted by the oscillating arm connected to an electric motor, the second by the blade-holder, designed to enable the necessary elastic flexibility of the ensemble of the windscreen wiper, and the third is constituted by the wiper blade generally made of rubber and with a rigid core made of metal, which adheres to the windscreen as it is pushed by the blade-holders.

Other types of windscreen wiper are known, in which the oscillating arm is connected directly to the wiper blade, which is constituted by an arched metal lamina. Anchored on this lamina is the wiper element, which is normally made of elastomeric material and preferably rubber. A windscreen wiper of this sort is described in the Italian patent No. 1091440. However, the lamina described in the aforesaid patent has a longitudinal central ribbing that jeopardizes elasticity thereof, and consequently does not enable the wiper element to adhere perfectly to the curvature of the glass during the operation of cleaning.

The purpose of the present invention is to provide a wiper blade for a windscreen wiper of the type in which the wiper element is connected directly to the oscillating arm that will overcome the drawbacks illustrated previously.

The above and other purposes are achieved by the present invention, the subject of which is a wiper blade for a windscreen wiper that presents the characteristics of Claim 1.

Further characteristics and advantages will emerge clearly from the ensuing description with reference to the attached plates of drawings, which are provided by way of non-limiting example and in which:
- Figure 1 is a partial, cross-sectional side view of a windscreen wiper that has a wiper blade with the characteristics of the present invention;
- Figure 2 is a cross-sectional view, according to the line II-II of Figure 1, of the body of the wiper element according to the invention;
- Figure 3 is a partial, cross-sectional side view of a windscreen wiper that has a wiper blade built according to an alternative embodiment; and
- Figure 4 is a cross-sectional view, according to the line IV-IV of Figure 3, of the body of the wiper element built according to an alternative embodiment thereof.

With reference to the figures, designated as a whole by 1 is a windscreen wiper, which has an oscillating arm 2 connected directly to a wiper blade 3 made of an arched metal lamina 4, mounted on which is the body 5 of the wiper element made of elastomeric material, in the case illustrated rubber, designed to rest on the glass 6 of the windscreen of the motor vehicle (not illustrated).

The metal lamina 4 has a substantially rectangular cross section with rounded edges, fitted on which is the body 5 of the wiper element, which has a substantially quadrilateral cross section, prolonged at the bottom in a central position, with an appendage 7, which is tapered and terminates with the shape of a wiper element of classic shape with sharp edges. A second, substantially triangular, appendage 8 is provided in a lateral position on the top part of the body 5, with exclusively aerodynamic functions.

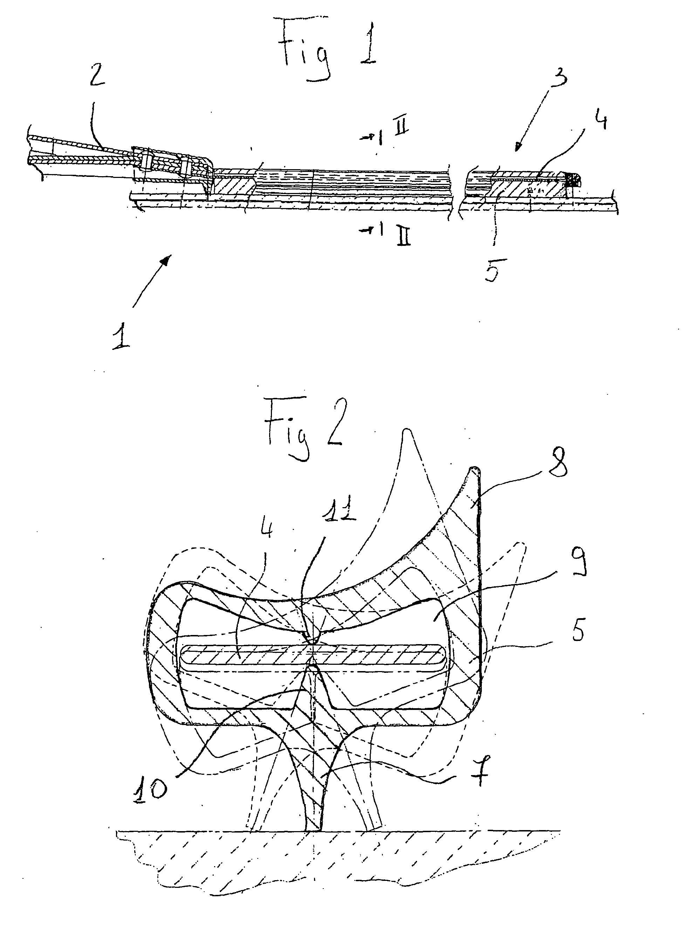

Made in the body 5 of the wiper element is a cavity 9, which extends longitudinally throughout the length of the body itself and has a substantially rectangular cross section with corners having a rounded profile for ease of production. Present within the cavity 9 on the top and bottom walls (as viewed in Figure 2) are two projections set facing one another, a top one 10 and a bottom one 11, which are shaped like rounded cusps and are made on the larger walls of the cavity 9. The bottom projection 10 has dimensions at least twice those of the top projection 11, and between the two ends of the cusps there is a distance such as to enable contact fitting of the arched lamina 4, in order to allow the wiper element 5 to be kept in position on the lamina 4. The metal lamina 4 is anchored at one end thereof to the oscillating arm 2, whilst the body 5 of the wiper, as has been said, is fitted on the metal lamina 4 starting from one end opposite to the anchored one, and is provided with a clamping cap.

As may be clearly seen in Figure 2, the lamina is free in a transverse direction in the cavity 9, which allows the body 5 of the wiper element to twist during reversal of motion of the windscreen wiper 1 on the glass of the windscreen. In this way, the wiper element is no longer subject to excessive and harmful bending that leads to an anomalous consumption of its edges. Furthermore, the elasticity of said wiper element is no longer entrusted to the shape of the tapered appendage 7, which can consequently be made with regular profiles, without having to rely upon the classic pine-shaped profile used in the majority of products of this type.

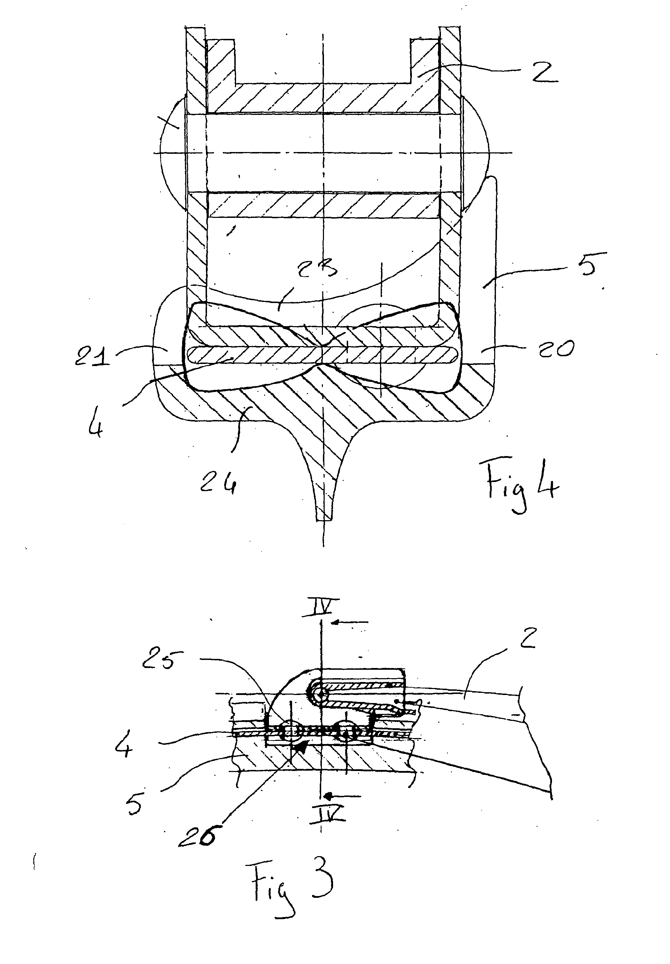

Illustrated in Figures 3 and 4 is a second preferred embodiment of the body 5 of the wiper element made of elastomeric material. This preferred embodiment has, as for the embodiment described previously, two side walls 20 and 21 fixed with respect to two longitudinal walls, a top one 23 and a bottom one 24, and provided with respective internal surfaces of arched shape designed to co-operate with the longitudinal side edges of the lamina 4 for guiding oscillation of the body 5.

The metal lamina 4 is anchored, via rivets 25, to the oscillating arm 2 in a position corresponding to an intermediate portion thereof, whilst the body 5 of the wiper element, in use, is fitted on the metal lamina 4 prior to anchorage of the arm, and consequently has an intermediate window 25 for anchorage of the arm 2 to said metal lamina 4.

In this embodiment, the cavity 9. has a butterfly-shaped cross section, inserted in which, as for the previous wiper element, is the lamina 4 so that the axis of rotation of the wiper element 5 is set substantially within said lamina, which is in contact with the parts closest to the top and bottom walls 23 and 24 of the body 5. The amplitude of the oscillation of the wiper element is determined by the angle subtended by the two walls 23 and 24.

Of course, the dimensions of the wiper element may vary, according to the width of the windscreen of the vehicle on which it is mounted, without thereby departing from the sphere of protection of the present invention, as defined in the annexed claims.

## Claims

1. A wiper blade for the windscreen wiper of a motor vehicle of the type comprising a metal lamina (4) and a wiper element (5) made of elastomeric material, which is provided with an internal longitudinal cavity (9) with substantially rectangular cross section, and is fitted on the metal lamina (4), the wiper blade being **characterized in that** the wiper element (5) comprises two projections (10, 11) set within the cavity and resting against respective plane surfaces of said metal lamina (4); the two projections (10, 11) defining an axis of rotation of the wiper element (5) itself.

2. The wiper blade according to Claim 1, **characterized in that** said two projections (10, 11) are shaped like a rounded cusp tapered towards the metal lamina (4).

3. The wiper blade according to Claim 1 or Claim 2, **characterized in that** it comprises a body (5) provided with two longitudinal walls delimiting the cavity and each equipped with a corresponding projection; a first wall of said two walls being also equipped with a tapered appendage (7), which extends on the opposite side of the respective projection (10, 11) and is completely fixed with respect to the corresponding first wall.

4. The wiper blade according to Claim 3, **characterized in that** said appendage (7) has a substantially triangular shape with sharp edges.

5. The wiper blade according to Claim 3 or Claim 4, **characterized in that** the body (5) is free to oscillate on the projections (10, 11) during reversal of motion of the windscreen wiper (1).

6. The wiper blade according to Claim 5, **characterized in that** said body (5) comprises two side walls (20, 21), which are fixed with respect to two longitudinal walls, a top one (23) and a bottom one (24), and are provided with respective internal surfaces of arched shape, designed to co-operate with respective longitudinal side edges of the lamina for guiding oscillation of the body (5).

7. The wiper blade according to any one of the preceding claims, **characterized in that** the axis of rotation of the wiper element (5) is set substantially within the lamina.

8. The wiper blade according to any one of the preceding claims, **characterized in that** the body (5) of the wiper element has a substantially triangular appendage (8) on its top wall, designed to vary the aerodynamic response of the wiper element.

9. The wiper blade according to any one of the preceding claims, **characterized in that** the metal lamina (4) is anchored at one end thereof to an oscillating arm; the body (5) of the wiper element being fitted on the metal lamina (4) starting from an end opposite to the anchored one, and being provided with a clamping cap.

10. The wiper blade according to any one of Claims 1 to 9, **characterized in that** the metal lamina (4) can be anchored to an oscillating arm in a region corresponding to a respective intermediate portion thereof; the body (5) of the wiper element being fitted on the metal lamina (4) prior to anchorage of the arm, and having an intermediate window for anchorage of the arm to the metal lamina.

11. The wiper blade according to any one of Claims 1 to 10, **characterized in that** the amplitude of the oscillation of the wiper element (5) is determined by the angle subtended by the two walls, the top one (23) and the bottom one (24).
